# FASCICULE DE BREVET EUROPEEN

(11) **EP 0 716 953 B1**
(45) Date de publication et mention de la délivrance du brevet: **20.01.1999**
(21) Numéro de dépôt: 95402391.7
(22) Date de dépôt: 25.10.1995
(51) Int. Cl.: B60Q 1/04

(54) **Fixation d'un bloc optique de véhicule automobile**
Befestigung einer Scheinwerfereinheit für Kraftfahrzeuge
Headlight unit assembly for vehicle

(30) Priorité: 16.12.1994 FR 9415206
(43) Date de publication de la demande: 19.06.1996
(73) Titulaire: AUTOMOBILES PEUGEOT, 75116 Paris (FR); AUTOMOBILES CITROEN, 92200 Neuilly-sur-Seine (FR)
(72) Inventeur: Arnould, Dominique, F-25600 Sochaux (FR)
(74) Mandataire: Polus, Camille

(56) Documents cités:
- EP-A- 0 620 137
- DE-A- 2 732 895
- DE-A- 3 616 694
- GB-A- 2 005 818

## Description

La présente invention est relative à un bloc optique de véhicule automobile, du type comprenant un boîtier, une glace et une patte de fixation liée au boîtier par une première extrémité, la deuxième extrémité de la patte de fixation étant adaptée pour être fixée sur un support.

La fabrication et l'assemblage des pièces de structure et de carrosserie des véhicules automobiles impliquent l'existence de cotes de tolérance. Ceci rend problématique le positionnement précis de la glace du bloc optique par rapport aux pièces de carrosserie voisines telles que notamment le pare-chocs et le capot.

Dans un dispositif connu, la continuité entre les différents éléments de la carrosserie et la face avant du bloc optique est obtenue par un bloc optique portant une patte de fixation mobile en translation et destinée à être vissée sur un support constitué par un élément de structure, avec en outre des moyens d'immobilisation en translation de la patte de fixation par rapport au bloc optique après vissage de cette patte sur le support.

Ce bloc optique a pour inconvénient de nécessiter de nombreuses pièces. De plus, lors du vissage des organes de fixation, la perte des références isostatiques se produit. D'autre part, la fixation du bloc optique crée des contraintes résiduelles susceptibles de le dégrader.

L'invention a pour but de proposer des moyens de fixation d'un bloc optique de véhicule automobile qui permettent d'aligner ce bloc sur la face avant du véhicule, en compensant les dispersions de fabrication des pièces de structure et de carrosserie, tout en limitant les contraintes dans le bloc optique et sans perdre ses références isostatiques, et ce, par des moyens simples, efficaces et peu coûteux.

A cet effet, l'invention a pour objet un bloc optique du type précité, caractérisé en ce que la patte de fixation est déformable plastiquement de manière à permettre d'ajuster la position du bloc optique par rapport à un élément de carrosserie adjacent, lors de la fixation de la patte sur le support.

Le bloc optique, suivant l'invention, peut comporter une ou plusieurs des caractéristiques suivantes:
- la patte de fixation comporte des zones de déformation préférentielle ;
- les zones de déformation préférentielle comprennent des rainures transversales ;
- les zones de déformation préférentielle comprennent des rainures à orientations obliques par rapport aux directions longitudinale et transversale de la patte de fixation ;
- le support est une plaque plane d'un élément de structure de véhicule ;
- l'un des deux éléments constitués par la deuxième extrémité de la patte de fixation et le support, est percé d'une lumière de passage recevant avec jeu un boulon de fixation ; et
- la patte de fixation est venue de matière avec le boîtier.

Un exemple de réalisation de l'invention va maintenant être décrit en regard des dessins annexés, sur lesquels :
- la figure 1 représente une vue en coupe transversale d'un bloc optique de véhicule automobile en appui sur un élément de la face avant de la carrosserie de celui-ci et fixé par la patte de fixation suivant l'invention ; et
- la figure 2 représente deux déformations plastiques possibles de la patte de fixation de la figure 1.

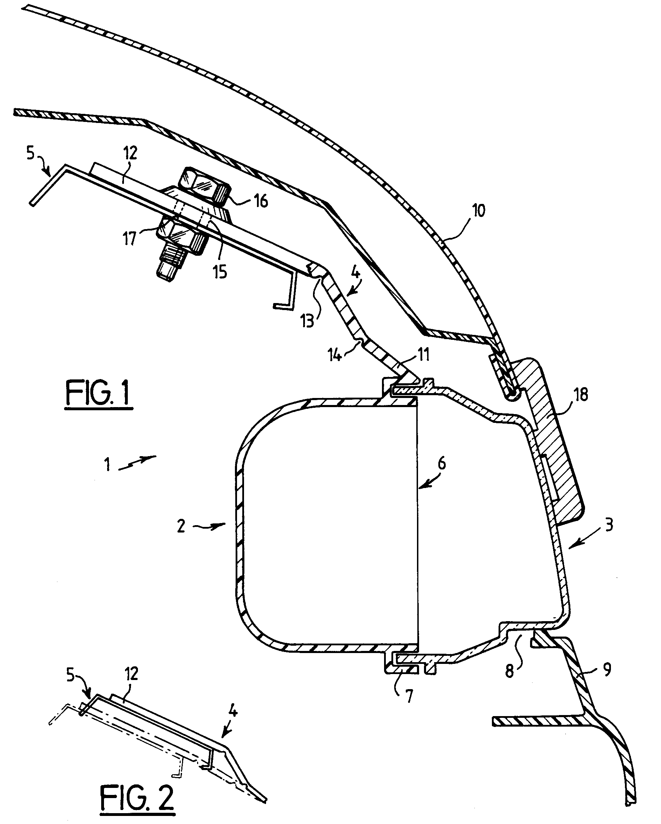

Le bloc optique 1 de véhicule automobile représenté à la figure 1 se compose d'un boîtier 2 de projecteur fermé par une glace 3, et d'une patte de fixation 4. Il est destiné à être fixé à un support 5.

Le boîtier 2 est, de façon bien connue, constitué d'un bloc à peu près parallélépipédique à parois minces, réalisé en matière plastique moulée, ouvert sur sa face avant 6, et dont la section longitudinale a sensiblement la forme d'un "U". Il est réalisé en une matière plastique appropriée, notamment en polypropylène chargé de fibres de verre.

L'extrémité avant ouverte du boîtier porte une gorge périphérique 7 ouverte vers l'avant.

La glace 3, réalisée par exemple en verre, possède une forme complémentaire de celle du boîtier 3. Son extrémité arrière est adaptée pour s'emboîter dans la gorge 7.

La partie avant de la glace 3 présente un décrochement 8, de manière à pouvoir l'insérer entre le pare-chocs 9 et le volet 10 de la carrosserie du véhicule.

La patte de fixation 4 est venue de matière, par son extrémité avant 11, avec le bord supérieur du boîtier 2. Cette patte 4 est inclinée vers l'arrière et vers le haut, à l'extérieur de ce boîtier 2, son extrémité arrière 12 étant libre.

La patte 4 a la forme d'une bande à peu près plane, d'épaisseur sensiblement égale à celle des parois du boîtier 2. Cette patte présente deux zones transversales amincies définissant deux charnières-film 13 et 14.

Ces deux charnières 13 et 14, situées dans la moitié avant de la patte 4, consistent en deux rainures transversales s'étendant sur toute la largeur de la patte 4, et sont ménagées sur la face inférieure de cette patte.

Une lumière 15, destinée au passage avec un large jeu d'un boulon 16, est ménagée dans la partie d'extrémité arrière libre 12 de la patte.

Le support 5 est un élément de structure de véhicule incliné vers le bas et vers l'avant. Il présente un trou 17 destiné au passage sans jeu notable du boulon 16.

La mise en place du bloc optique par sa patte de fixation qui vient d'être décrite, est détaillée en regard des figures 1 et 2.

Le bloc optique 1 réalisé en assemblant le boîtier 2 et la glace 3, est mis en place dans la carrosserie par appui du décrochement 8 de la glace 3 sur le pare-chocs 9, et par appui de la partie arrière de la patte de fixation 4 sur le support 5.

La patte de fixation est ensuite déformée au niveau des charnières-film 13 et 14 (figure 2) afin d'une part d'aligner la face avant de la glace 3 par rapport au pare-chocs 9 et au volet 10 de carrosserie, au moyen d'une cale provisoire 18, et d'autre part, de faire correspondre la lumière 15 de la patte 4 avec le trou 17 du support 5. Le boulon 16 est alors serré pour immobiliser le bloc optique 1.

On comprend ainsi que la patte 4 subit une déformation plastique au niveau de ses charnières 13 et 14 lors de la mise en place du bloc optique 1. Cette patte garde sa forme une fois la position correcte atteinte, de sorte qu'aucune contrainte résiduelle parasite ne se développe dans l'ensemble boîtier-patte.

La combinaison de la déformation plastique de la patte 4 et de la dimension de la lumière 15 permet de compenser les dispersions de fabrication-série des éléments, afin d'aligner la face de la glace 3 par rapport au pare-chocs 9 et au volet 10.

En variante, il peut être intéressant que la lumière 15 soit portée par le support 5 et que le simple trou 17 soit ménagé dans la patte de fixation 4.

Selon une autre variante améliorant les possibilités de déformation de la patte de fixation, les charnières-film ont des orientations obliques, de préférence opposées, par rapport aux directions longitudinale et transversale de la patte.

## Revendications

1. Bloc optique (1) de véhicule automobile, du type comprenant un boîtier (2), une glace (3) et une patte de fixation (4) liée au boîtier (2) par une première extrémité (11), la deuxième extrémité (12) de la patte de fixation (4) étant adaptée pour être fixée sur un support (5), caractérisé en ce que la patte de fixation (4) est déformable plastiquement de manière à permettre d'ajuster la position du bloc optique par rapport à un élément de carrosserie (9) adjacent lors de la fixation de la patte sur le support.

2. Bloc optique selon la revendication 1, caractérisé en ce que la patte de fixation (4) comporte des zones (13,14) de déformation préférentielle.

3. Bloc optique selon la revendication 2, caractérisé en ce que les zones (13,14) de déformation préférentielle comprennent des rainures transversales.

4. Bloc optique selon la revendication 2 ou 3, caractérisé en ce que les zones (13,14) de déformation préférentielle comprennent des rainures à orientations obliques par rapport aux directions longitudinale et transversale de la patte de fixation.

5. Bloc optique selon l'une quelconque des revendications 1 à 4, caractérisé en ce que le support (5) est une plaque plane d'un élément de structure du véhicule.

6. Bloc optique selon l'une quelconque des revendications 1 à 5, caractérisé en ce que l'un des deux éléments constitués par la deuxième extrémité (12) de la patte de fixation (4) et le support (5), est percé d'une lumière (15) de passage recevant avec jeu un boulon de fixation (16).

7. Bloc optique selon l'une quelconque des revendications 1 à 6, caractérisé en ce que la patte de fixation (4) est venue de matière avec le boîtier (2).

## Claims

1. Motor vehicle headlight unit (1) of the type comprising a casing (2), a transparent pane (3) and a fixing arm (4) connected to the casing (2) by a first end (11), the second end (12) of the fixing arm (4) being adapted in order to be fixed to a support (5), characterised in that the fixing arm (4) is plastically deformable so that the position of the headlight unit can be adjusted relative to an adjacent bodywork element (9) during the fixing of the arm to the support.

2. Headlight unit according to claim 1, characterised in that the fixing arm (4) is provided with zones (13, 14) of preferential deformation.

3. Headlight unit according to claim 2, characterised in that the zones (13, 14) of preferential deformation comprise transverse grooves.

4. Headlight unit according to claim 2 or 3, characterised in that the zones (13, 14) of preferential deformation comprise grooves having oblique orientations relative to the longitudinal and transverse directions of the fixing arm.

5. Headlight unit according to any one of claims 1 to 4, characterised in that the support (5) is a flat plate of a structural element of the vehicle.

6. Headlight unit according to any one of claims 1 to 5, characterised in that one of the two elements formed by the second end (12) of the fixing arm (4) and the support (5) has a through opening (15) receiving with play a fixing bolt (16).

7. Headlight unit according to any one of claims 1 to 6, characterised in that the fixing arm (4) is integral with the casing (2).

## Patentansprüche

1. Scheinwerfereinheit (1) für ein Kraftfahrzeug mit einem Gehäuse (2), einer Scheibe (3) und einer Befestigungsklammer (4), welche an dem Gehäuse (2) an einem ersten Ende (11) liegt, wobei das zweite Ende (12) der Befestigungsklammer (4) derart gestaltet ist, daß es auf einer Halterung (5) fixierbar ist, dadurch gekennzeichnet, daß die Befestigungsklammer (4) derart plastisch verformbar ist, daß die Position der Scheinwerfereinheit bezüglich eines benachbarten Karosserieelements (9) bis zur Befestigung der Klammer auf der Halterung einstellbar ist.

2. Scheinwerfereinheit nach Anspruch 1, dadurch gekennzeichnet, daß die Befestigungsklammer (4) Zonen (13,14) vorzugsweiser Deformation aufweist.

3. Scheinwerfereinheit nach Anspruch 2, dadurch gekennzeichnet, daß die Zonen (13,14) zur vorzugsweisen Deformation transversale Rillen aufweisen.

4. Scheinwerfereinheit nach Anspruch 2 oder 3, dadurch gekennzeichnet, daß die Zonen (13,14) der vorzugsweisen Deformation Rillen aufweisen, die bezüglich der Längsrichtung und Querrichtung der Befestigungsklammer schräg orientiert sind.

5. Scheinwerfereinheit nach einem der Ansprüche 1-4, dadurch gekennzeichnet, daß die Halterung (5) eine ebene Verstärkung eines Strukturelements des Fahrzeugs ist.

6. Scheinwerfereinheit nach einem der Ansprüche 1-5, dadurch gekennzeichnet, daß das eine der zwei Elemente, welche durch das zweite Ende (12) der Befestigungsklammer (4) und die Halterung (5) gebildet sind, von einem Durchgangsschlitz (15) durchsetzt ist, in dem mit Spiel ein Befestigungsbolzen (16) aufnehmbar ist.

7. Scheinwerfereinheit nach einem der Ansprüche 1-6, dadurch gekennzeichnet, daß die Befestigungsklammer (4) aus einem Stück mit dem Gehäuse (2) gebildet ist.
